# EUROPEAN PATENT SPECIFICATION

(11) **EP 0 893 059 B1**
(45) Date of publication and mention of the grant of the patent: **09.10.2002**
(21) Application number: 97830378.2
(22) Date of filing: 22.07.1997
(51) Int. Cl.: A21B 1/00, A21B 1/28, A21B 1/10

(54) **Oven for cooking and/or roasting food products**
Ofen zum Garen und/oder Backen von Speisen
Four pour cuire et/ou rôtir des aliments

(43) Date of publication of application: 27.01.1999
(73) Proprietor: BARILLA ALIMENTARE S.P.A., 43100 Parma (IT)
(72) Inventor: Balestrieri, Giuseppe, 43100 Parma (IT); Menoni, Sante, 43100 Parma (IT)
(74) Representative: Botti, Mario

(56) References cited:
- DE-A- 2 418 067
- DE-A- 3 931 621
- FR-A- 2 195 148

## Description

The present invention relates in its most general aspect to the field of ovens used for cooking and/or roasting food products.

In particular, the present invention relates to a method of heating ovens of the said type.

In the field of cooking and roasting food products, many types of oven are known, which have their own characteristics of combustion system and heat transfer to the cooking chamber, including:
- ovens with direct heating, wherein the combustion takes place in the cooking chamber;
- ovens with indirect heating, wherein the combustion takes place in a circuit separate from the cooking chamber; the heat is transferred to the cooking chamber through a flue gas/air heat exchanger;
- ovens with a thermal cycle in which the combustion takes place in a circuit separate from the cooking chamber, with recirculation of the flue gases; the heat is transferred to the cooking chamber by radiation from radiant tubes.

It is also known that, in the said ovens, the combustion can be carried out by means of burners of adjustable or non-adjustable type.

In non-adjustable burners, the rates of fuel and air are fixed and no provision is made for automatically controlling the thermal energy input to the cooking chamber.

Such burners are usually of a simple on/off type or provide two control positions for the rates of fuel and air, one corresponding to a low and the other to a high flame.

Adjustable burners, on the other hand, are characterized by the facility for controlling the thermal energy input to the cooking chamber by means of controlling the feed of fuel and air.

Purely by way of example, reference will be made below to a thermal cycle oven, which is by far the most widely used even though it is actually held to be the least efficient from the energy point of view.

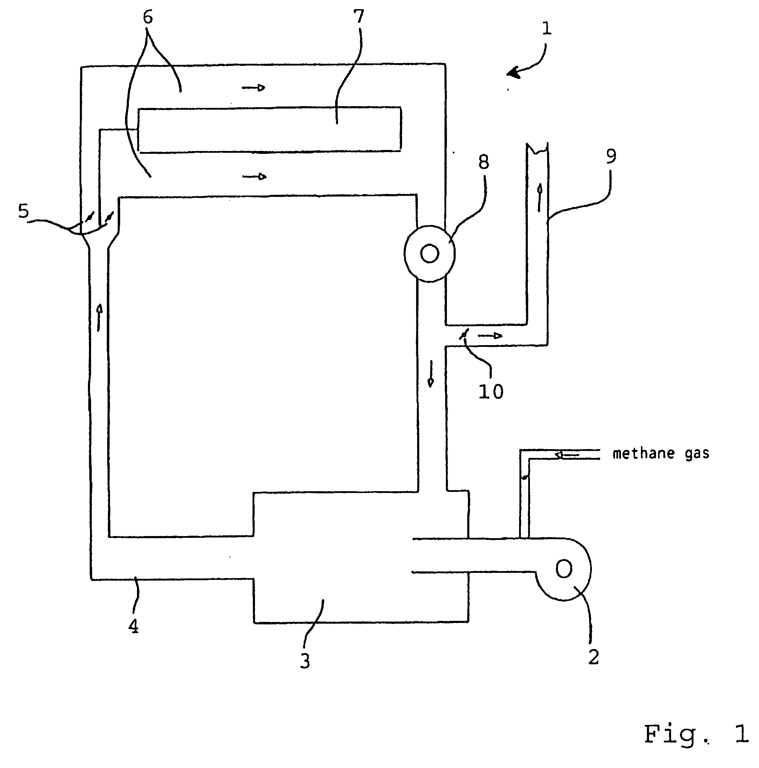

A typical diagram of a thermal cycle oven is reproduced in Figure 1, where it is globally marked 1.

This oven comprises a burner 2 in which appropriate quantities of fuel and air are mixed and the combustion is initiated, and a combustion chamber 3.

The gases resulting from the combustion, which are termed flue gases below and which have a high pressure and a high heat content, pass from the burner 2 along the circuit 4 to the distributor flaps 5.

The flaps 5 regulate the flow of the said gases towards the circulation lines 6, which are arranged along the cooking chamber 7 and in contact with the upper part (roof) and lower part (bottom) thereof.

The heat is transferred to the cooking chamber 7 by radiation from the flue gases circulating in the lines 6 which, as a result of the heat exchange, will develop a low pressure which can be lower than that in the cooking chamber 7.

The flue gases at low pressure are then directed towards a fan 8, from which they are in part recirculated to the oven for a further heat exchange cycle and in part discharged from the chimney 9 by acting on the control flap 10.

A thermal cycle oven, as described above, shows some intrinsic energy dissipations which cannot be completely eliminated due to the constructional features of the oven.

Such dissipations are to be ascribed to the lower pressure in the circulation circuit of the flue gases compared with the cooking chamber and to the necessary free expansion of the lines in the circulation circuit of the flue gases, so that such a circuit is not perfectly gastight with respect to the cooking chamber.

This has the result that hot air is drawn out of the cooking chamber, generating a direct flow into the circuit of the flue gas in circulation.

The size of this flow is significant, when one reflects that energy analyses carried out on thermal-cycle-ovens have revealed that the total quantity of flue gases exiting from the chimney can exceed by up to 500% the quantity of gases introduced by the burner into the oven as a result of the combustion.

Moreover, the said flue gases leave the chimney at an even higher temperature (in some cases higher than 350°C) and with a residual oxygen content varying between 14 and 18%.

Finally, the said flow of hot air is also responsible for the inhomogeneity of the humidity and temperature values in the cooking chamber along the direction of movement of the flue gases, which entails inhomogeneous cooking of the product along the said direction.

A common disadvantage of the abovementioned cooking ovens is the high fuel consumption connected with the type of the burners used, which are usually of the non-adjustable type and have inadequate combustion ratios.

On the other hand, the replacement of non-adjustable burners by adjustable burners of the state of the art, in which the feed of fuel and air is automatically controlled, brings an improvement in the combustion efficiency, but the reduction in fuel consumption is no more than 5%.

Basically, then, it has been demonstrated that, due to the type of the burners adopted and/or the particular constructional features of the ovens, the flue gases leave the chimneys of the abovementioned cooking ovens with a high residual oxygen content (of the order of 14-18% in the case of ovens ) and at a high temperature.

The technical problem underlying the present invention is that of improving the heating system of a cooking oven for the purpose of reducing fuel consumption and also improving the cooking of the products.

The idea for solving such a technical problem is to use flue gases "rich" in oxygen and at high temperature as fuels in the burner of a cooking oven.

Based on this idea, the said technical problem is solved by a method of heating an oven for cooking and/or roasting food products, comprising at least one adjustable burner and characterized by the following steps:
- feeding a stream of fuel gas and a stream of air deficient in quantity with respect to the fuel to said at least one burner,
- mixing the said streams of fuel and air and initiating the combustion, and
- recirculating the flue gases produced in the oven to said at least one burner to complete the combustion.

The method according to the invention is based on the surprising fact of using, as supporters of combustion, the flue gases produced by combustion in the cooking oven and appropriately recirculated.

The combustion takes place in two separate zones adjacent to said at least one burner, which below are called zones of primary and secondary combustion.

In the primary combustion zone, the fuel is partially burned utilizing an insufficient quantity of air, while, in the secondary combustion zone, the combustion is substantially completed by means of the oxygen-rich flue gases.

Moreover, in the method according to the invention, the flame of the burner is generated in the primary combustion zone and is such as to cover both combustion zones.

The presence of said flame is always guaranteed during the operation of the burner by means of feeding a predetermined quantity of air and a variable quantity of fuel into the primary combustion zone.

It should be noted that conveniently the recirculated flue gases come only partially into contact with the flame in the secondary combustion zone.

This makes it possible to utilize the said gases efficiently as supporters of combustion without causing problems of separation or extinction of the flame.

The method according to the invention has the advantage that it effectively optimizes the combustion in a cooking oven and thereby reduces the fuel consumption by about 10%.

A further subject of the invention is an adjustable burner for cooking ovens, comprising an ignition system, a combustion head, a first line for feeding fuel gas, with the combustion head mounted on the end thereof, and a second line for feeding air, which line encloses the combustion head and the first feed line and which, with the combustion head, defines a primary combustion zone, said burner being characterized in that it comprises a third line for feeding the flue gases functioning as supporters of combustion, which line encloses said second feed line and, with the latter, defines a secondary combustion zone adjacent to said primary combustion zone.

Preferably, the said feed lines in the burner of the invention are concentric.

According to a preferred embodiment of the invention, the burner comprises an air suction fan and a casing for conveying the suction air to the fan.

The burner according to the invention can further comprise a valve for adjusting the flue gas feed and a valve for adjusting the fuel, these valves being actuated by a miniature motor which receives its signal from a sensor measuring the temperature in the cooking chamber.

A subject of the invention is also a cooking oven for cooking and/or roasting food products, which comprises at least one adjustable burner of the said type and a system for recirculating the flue gases to said at least one burner.

Preferably, said cooking oven is a thermal cycle oven.

According to a preferred embodiment of the oven of the invention, the system for recirculating the flue gases consists of piping which leads from the gas discharge chimney to the burner and has a fan for varying the rate of flow of flue gases to the burner.

This rate is controlled as a function of the temperature of the flue gases in the chimney, measured by a suitable sensor, making it possible to have the correct quantity of flue gases at the burner with the correct oxygen feed to the secondary combustion zone.

If the cooking oven according to the invention functions with a "thermal cycle", it can further comprise a system for controlling the pressure drop in the flue gas circuit.

This control is preferably effected by means of at least one motorized flap for controlling the flow of flue gases to be passed to the chimney, the flap being actuated by a pressure drop controller as a function of the pressure drop detected by a sensor in the combustion chamber.

In this way, the said motorized flap controls the flow of flue gases to the circulation lines, and thereby the pressure drop in these lines, minimizing the heat loss in the cooking chamber.

It has been found that the introduction of the pressure drop control system into a thermal cycle oven makes it possible to reduce fuel consumption by about 20% as compared with fuel consumption in a conventional thermal cycle oven using an equivalent burner.

Moreover, the temperature and the humidity in the cooking chamber are more homogeneous along the direction of movement of the flue gases with consequent homogeneity of cooking of the products along that direction.

Basically, the burner and the flue gas recirculation system according to the invention, when applied to a cooking oven, bring a saving in the fuel consumption of about 15% as compared with the consumption of a conventional oven with an non-adjustable burner and of about 10% as compared with the consumption of a conventional oven with an adjustable burner.

In the case of the cooking oven functioning with a thermal cycle, it is possible to obtain a further fuel saving of about 20% by adopting of the pressure drop control system in the flue gas circuit, so that a total saving of about 30-35% is achieved.

The features and the advantages of the invention are explained in more detail in the description which follows, with reference to a diagram of a burner and one of a thermal cycle oven according to the invention, which are given for indicative and non-limiting purposes.

Figure 1 shows a diagram of a conventional thermal cycle oven.

Figure 2 shows a diagram of a cross-section of an adjustable burner according to the invention.

Figure 3 shows a diagram of a thermal cycle oven according to the invention.

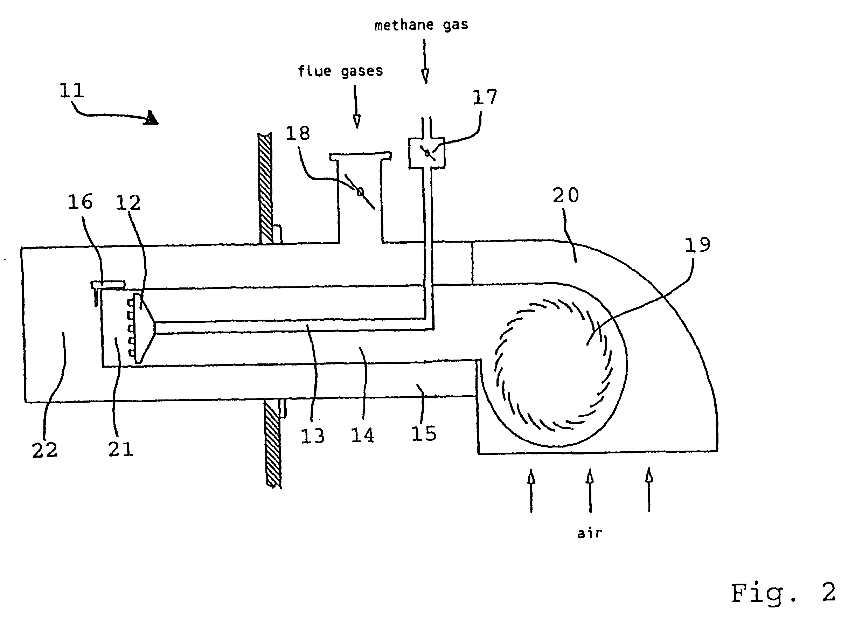

With reference to Figure 2, the burner of the invention, marked 11 as a whole, comprises among its essential parts a combustion head 12, a fuel (methane) feed line 13, an air feed line 14, a flue gas feed line 15 and an ignition system 16.

The feed line 13 contains a control valve 17 for adjusting the fuel to the combustion head 12, while the feed line 15 contains a control valve 18 for adjusting the flue gases.

The valves 17 and 18 are actuated by a miniature motor which receives its signal from a sensor measuring the temperature in the cooking chamber.

By contrast, the rate of flow of air in the feed line 14 is fixed and is controlled by a suction fan 19.

The air flows to the fan 19 through the conveyor casing 20.

The combustion head 12 and the feed line 14 define a primary combustion zone 21 in which the fuel is partially burned with an insufficient quantity of air according to the heating method of the invention and the flame of the burner 12 is generated.

The feed lines 14 and 15 in turn define a secondary combustion zone 22 in which the combustion is substantially completed using the flue gases as supporters of combustion.

Suitable dimensions for the zones 21 and 22 for optimizing combustion can be determined experimentally in dependence on the capacity of the burner and on the characteristics of the oven, the dimensions of the lines 14 and 15 being defined both in width and in length.

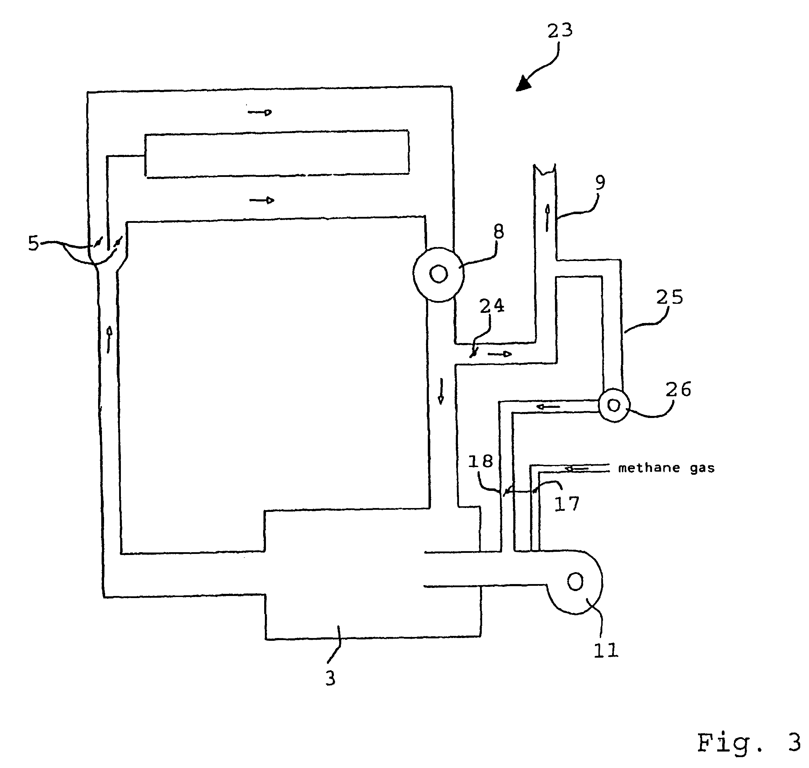

Referring now to Figure 3, a diagram of a thermal cycle oven, marked 23 as a whole, is shown, which comprises the burner 11 according to the invention and a recirculation system for the flue gases.

In this figure, the parts of the oven 23 which are structurally and functionally the same as the corresponding parts of the thermal cycle oven described in Figure 1, are again marked by the same reference numbers.

The thermal cycle oven 23 comprises the adjustable burner 11 according to the invention and a combustion chamber 3.

The burner 11 is fed with air at a fixed rate, with fuel at a variable rate controlled by the valve 17 and with recirculated flue gas at a variable rate controlled by the valve 18 as described below.

The valves 17 and 18 are actuated by a miniature motor which receives its signal from a sensor measuring the temperature in the cooking chamber.

The flue gases leaving the burner 11 reach the distributor flaps 5 which regulate the heat distribution between the top and bottom of the cooking chamber.

After the heat exchange with the cooking chamber, the gases reach the fan 8, from which they are in part recirculated to the oven for a further heat exchange cycle and in part passed to the chimney 9 by acting on the control flap 24.

The flap 24 is, as distinct from the corresponding flap 10 of a conventional thermal cycle oven, automated and driven by a pressure drop controller as a function of the pressure drop detected by a sensor in the combustion chamber.

The flue gases passed to the chimney 9 are in part discharged and in part recirculated to the burner for utilization as supporters of combustion in accordance with the heating method of the invention.

The system for recirculating the flue gases consists of piping 25 which leads from the chimney 9 to the burner 11 and is equipped with a fan 26 for controlling the rate of flow of the flue gases recirculated to the burner 11.

The fan 26 is actuated by a device which receives its signal from a sensor which determines the flue gas temperature in the chimney.

## Claims

1. Method of heating an oven for cooking and/or roasting food products, comprising at least one adjustable burner and **characterized by** the following steps:
- feeding a stream of fuel gas and a stream of air deficient in quantity with respect to the fuel to said at least one burner,
- mixing the said streams of fuel and air and initiating the combustion, and
- recirculating the flue gases produced in the oven to said at least one burner to complete the combustion.

2. Method according to Claim 1, **characterized in that** the air feed rate is fixed, while that of the fuel is variable.

3. Method according to Claim 1 or 2, **characterized in that** the recirculated flue gas rate is variable and is controlled as a function of the fuel rate.

4. Adjustable burner for ovens for cooking and/or roasting food products, comprising an ignition system (16), a combustion head (12), a first line (13) for feeding fuel gas, with the combustion head (12) mounted on the end thereof, and a second line (14) for feeding air, which line (14) encloses the combustion head (12) and the first feed line (13) and which, with the combustion head (12), defines a primary combustion zone (21), said burner being **characterized in that** it comprises a third line (15) for feeding the flue gases functioning as supporters of combustion, which line (15) encloses the second feed line (14) and, with the latter, defines a secondary combustion zone (22) adjacent to said primary combustion zone (21).

5. Burner according to Claim 4, **characterized in that** it comprises an air suction fan (19) and a casing (20) for conveying the air to the fan (19).

6. Burner according to Claim 4 or 5, **characterized in that** it comprises a valve (18) for adjusting the flue gas feed and a valve (17) for adjusting the fuel, these valves being actuated by a miniature motor which receives its signal from a sensor measuring the temperature in the cooking chamber.

7. Oven for cooking and/or roasting food products, comprising at least one burner according to any of Claims 4, 5 and 6 and a system for recirculating the flue gases to said at least one burner.

8. Oven according to Claim 7, **characterized in that** said system for recirculating the flue gas consists of piping (25) which leads from the gas discharge chimney to the burner and has a fan (26) for varying the rate of flow of flue gases to the burner.

9. Oven for cooking and/or roasting food products according to Claim 7 or 8, **characterized in that** it is a thermal cycle oven.

10. Oven according to Claim 9, further comprising a system for controlling the pressure drop in the flue gas circulation lines used for heat exchange with the cooking chamber.

11. Oven according to Claim 10, **characterized in that** said system for controlling the pressure drop consists of at least one motorized flap for controlling the flow of flue gases to be passed to the chimney, the flap being actuated by a pressure drop controller as a function of the pressure drop detected by a sensor in the combustion chamber.

## Patentansprüche

1. Verfahren zum Heizen eines Ofens zum Kochen und/oder Braten von Nahrungsmittelerzeugnissen, der zumindest einen einstellbaren Brenner hat und das durch die nachstehenden Schritte **gekennzeichnet** ist:
Zuführen eines Brennstoffgasstroms und eines in Bezug auf den Brennstoff in Menge unzureichenden Luftstroms zu dem zumindest einen Brenner,
Mischen des Brennstoffstroms und des Luftstroms und Auslösen der Verbrennung, und
Rückführen des in dem Ofen erzeugten Abgases zu dem zumindest einen Brenner, um die Verbrennung zu vervollständigen.

2. Verfahren gemäß Anspruch 1,
**dadurch gekennzeichnet, dass**
die Luftzuführrate konstant ist, während die des Brennstoffs variabel ist.

3. Verfahren gemäß Anspruch 1 oder 2,
**dadurch gekennzeichnet, dass**
die Rate rückgeführten Abgases variabel ist und als eine Funktion der Brennstoffrate geregelt wird.

4. Einstellbarer Brenner für Öfen zum Kochen und/oder Braten von Nahrungsmittelerzeugnissen, welcher eine Zündanlage (16), einen Verbrennungskopf (12), eine erste Leitung (13) zum Zuführen von Brennstoffgas, wobei der Verbrennungskopf (12) an ihrem Ende montiert ist und eine zweite Leitung (14) zum Zuführen von Luft hat, wobei die Leitung (14) den Verbrennungskopf (12) und die erste Zuführleitung (13) einschließt und sie mit dem Verbrennungskopf (12) eine erstrangige Verbrennungszone (21) definiert, wobei der Brenner **dadurch gekennzeichnet ist, dass** er eine dritte Leitung (15) zum Zuführen der als verbrennungsunterstützend funktionierenden Abgase hat, wobei die Leitung (15) die zweitrangige Zuführleitung (14) umschließt und mit der letzteren eine zweite Verbrennungszone (22) angrenzend an die erstrangige Verbrennungszone (21) definiert.

5. Brenner gemäß Anspruch 4,
**dadurch gekennzeichnet, dass**
er einen Luftansaugventilator (19) und ein Gehäuse (20) zum Fördern der Luft zu dem Ventilator (19) hat.

6. Brenner gemäß Anspruch 4 oder 5,
**dadurch gekennzeichnet, dass**
er ein Ventil (18) zum Einstellen der Abgaszufuhr und ein Ventil (17) zum Einstellen des Brennstoffs hat, wobei diese Ventile durch einen Miniaturmotor betätigt werden, welcher seine Signale von einem die Temperatur in der Kochkammer messenden Sensor erhält.

7. Ofen zum Kochen und/oder Braten von Nahrungsmittelerzeugnissen, der zumindest einen Brenner gemäß einem der Ansprüche 4, 5 und 6 und ein System zum Rückführen der Abgase zu dem zumindest einen Brenner hat.

8. Ofen gemäß Anspruch 7,
**dadurch gekennzeichnet, dass**
das System zum Rückführen des Abgases aus einer Rohrleitung (25) besteht, welche von dem Gasabgabekamin zu dem Brenner führt und einen Ventilator (26) zum Variieren der Abgasstromrate zu dem Brenner hat.

9. Ofen zum Kochen und/oder Braten von Nahrungsmittelerzeugnissen gemäß Anspruch 7 oder 8,
**dadurch gekennzeichnet, dass**
er ein Ofen mit thermischem Kreislauf ist.

10. Ofen gemäß Anspruch 9, der ferner ein System zum Regeln des Druckverlusts in den Abgasrückführleitungen hat, die zum Hitzeaustausch mit der Kochkammer verwendet werden.

11. Ofen gemäß Anspruch 10, **dadurch gekennzeichnet, dass** das System zum Regeln des Druckabfalls aus zumindest einer motorisierten Klappe zum Regeln des Abgasstroms besteht, der zu dem Kamin geführt werden soll, wobei die Klappe durch eine Druckabfallregelungseinrichtung als eine Funktion des durch einen Sensor in der Verbrennungskammer ermittelten Druckabfalls betätigt wird.

## Revendications

1. Méthode pour chauffer un four pour cuisiner et/ou rôtir des aliments, comportant au moins un brûleur réglable et **caractérisée par** les étapes suivantes:
- alimentation, dudit au moins un brûleur, par un flux de gaz combustible et par un flux d'air, le flux de gaz étant déficient en quantité,
- mélange desdits flux de gaz et d'air et initiation de la combustion,
- circulation des gaz produits dans le four vers le brûleur pour compléter la combustion.

2. Méthode selon la revendication 1, **caractérisée en ce que** le taux d'alimentation en en air est fixé, alors que celui du gaz combustible est variable.

3. Méthode selon l'une des revendications 1 ou 2, **caractérisée en ce que** le taux de circulation est variable et commandé comme une fonction du taux de gaz combustible.

4. Brûleur réglable pour four pour cuisiner et/ou rôtir des aliments, comportant un dispositif (16) d'allumage, une tête (12) de combustion, un premier conduit (13) pour l'alimentation en gaz de combustion, avec la tête (12) de combustion montée sur la fin du premier conduit, un deuxième conduit (14) d'alimentation en air, le deuxième conduit (14) comportant la tête (12) de combustion et le premier conduit (13) d'alimentation et qui, avec la tête (12) de combustion, définit une zone (21) de combustion primaire, ledit brûleur étant **caractérisé en ce qu'**il comporte un troisième conduit (15), pour l'alimentation en gaz produit, fonctionnant comme support de la combustion, ledit troisième conduit (15) comportant le deuxième conduit (14) et, avec ce dernier, définit une deuxième zone (22) de combustion adjacente à ladite première zone (21) de combustion.

5. Brûleur selon la revendication 4, **caractérisé en ce que** il comporte un ventilateur (19) aspirateur d'air et un boîtier (20) pour conduire l'air jusqu'au ventilateur (19).

6. Brûleur selon l'une des revendications 4 ou 5, **caractérisé en ce que** il comporte une valve (18) pour régler l'alimentation en gaz produit, et une valve (17) pour régler l'alimentation en gaz combustible, ces valves étant mises en oeuvre par un moteur miniature qui reçoit son signal d'un capteur mesurant la température dans la chambre de cuisine.

7. Four pour cuisiner et/ou rôtir des aliments, comportant au moins un brûleur selon l'une quelconque des revendications 4, 5 et 6, et un système pour diriger les gaz produits vers ledit brûleur.

8. Four selon la revendication 7, **caractérisé en ce que** le système pour diriger les gaz produits consiste en un conduit (25) qui va de la cheminée d'évacuation jusqu'au brûleur, et qui comporte un ventilateur pour faire varier le taux du flux de gaz produits arrivant au brûleur.

9. Four pour cuisiner et/ou rôtir des aliments selon l'une des revendications 7 ou 8, **caractérisé en ce qu'**il est un four à cycle thermique.

10. Four selon la revendication 9, comportant un dispositif pour contrôler la chute de pression dans le conduit de circulation des gaz produits utilisé pour les échanges de chaleur avec la chambre de cuisine.

11. Four selon la revendication 10, **caractérisé en ce que** ledit dispositif pour contrôler la chute de pression consiste en au moins un volet motorisé pour commander le flux des gaz produits devant passer par la cheminée, le volet étant mis en oeuvre par un contrôleur de chute de pression comme une fonction d'une chute de pression détectée par un capteur dans la chambre de combustion.
